# EUROPÄISCHE PATENTSCHRIFT

(11) **EP 2 619 874 B1**
(45) Veröffentlichungstag und Bekanntmachung des Hinweises auf die Patenterteilung: **23.01.2019**
(21) Anmeldenummer: 11761022.0
(22) Anmeldetag: 25.08.2011
(51) Int. Cl.: B60L 11/18, H02J 7/00, H02M 7/501, H02J 7/14, H02P 27/14

(54) **SYSTEM ZUM LADEN EINES ENERGIESPEICHERS UND VERFAHREN ZUM BETRIEB DES LADESYSTEMS**
SYSTEM FOR CHARGING AN ENERGY STORE, AND METHOD FOR OPERATING THE CHARGING SYSTEM
SYSTÈME POUR CHARGER UN ACCUMULATEUR D'ÉNERGIE ET PROCÉDÉ DE FONCTIONNEMENT DU SYSTÈME DE CHARGEMENT

(30) Priorität: 20.09.2010 DE 102010041065
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/064636
(87) Internationale Veröffentlichungsnummer: WO 2012/038186

(56) Entgegenhaltungen:
- DE-A1- 10 103 031
- US-A- 5 642 275
- US-A- 006 058 032

## Beschreibung

Die Erfindung betrifft ein System zum Laden eines Energiespeichers und ein Verfahren zum Betrieb des Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.
Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.

Im Gegensatz zu konventionellen Systemen, bei welchen eine elektrische Maschine über einen Wechselrichter gesteuert wird und durch einen davon getrenntem elektrischen Energiespeicher mit elektrischer Energie versorgt wird, steht bei den in den älteren Anmeldungen DE 10 2010 027 857 A1 und DE 10 2010 027 861 A1 beschriebenen Batterien keine konstante Gleichspannung zur Verfügung, so dass derartige Batterien nicht ohne weiteres in herkömmliche Energieversorgungsnetze, wie z.B. Bordnetze eines Elektro- oder Hybridfahrzeugs, integrierbar sind.

Die Druckschrift US 6 058 032 A1 offenbart einen PWM-gesteuerten Leistungsumrichter für eine dreiphasige elektrische Maschine mit in Reihe geschalteten Batteriemodulen, welche über moduleigene Wechselrichter selektiv in die Energieversorgung einer Phase der elektrischen Maschine einbezogen werden können. Die elektrische Maschine ist zudem an einem Sternpunkt mit einer elektrischen Gleichspannungsquelle koppelbar, über die die Batteriemodule geladen werden können.

### Offenbarung der Erfindung

Die vorliegende Erfindung schafft ein Energieversorgungsnetz, welches einen steuerbaren ersten Energiespeicher aufweist, welcher der Steuerung und der elektrischen Energieversorgung einer n-phasigen elektrischen Maschine, mit n ≥1, dient. Dabei weist der erste Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einem Bezugspotential - im Folgenden als Bezugsschiene bezeichnet - und andererseits mit jeweils einer Phase der elektrischen Maschine verbunden. In Abhängigkeit von Steuersignalen werden die jeweils zugeordneten Energiespeicherzellen durch einen Schalter der zugeordneten steuerbaren Koppeleinheit isoliert und dieser Schalter in dem Energieversorgungszweig überbrückt, oder die Koppeleinheiten schalten die jeweils zugeordneten Energiespeicherzellen in den Energieversorgungszweig. Das Energieversorgungsnetz weist außerdem einen zweiten Energiespeicher, aus welchem elektrische Verbraucher mit Gleichspannung versorgbar sind, und ein Ladegerät für den zweiten Energiespeicher auf, welches eingangsseitig mit den Energieversorgungszweigen des ersten Energiespeichers und den Phasen der elektrischen Maschine und ausgangsseitig mit dem zweiten Energiespeicher verbunden ist.

### Vorteile der Erfindung

Der steuerbare erste Energiespeicher liefert während eines Motorbetriebs der elektrischen Maschine ausgangsseitig eine Wechselspannung zur Ansteuerung der elektrischen Maschine. Im Gegensatz zu konventionellen Systemen, bei welchen eine elektrische Maschine über einen Wechselrichter gesteuert wird und durch einen davon getrennten elektrischen Energiespeicher mit elektrischer Energie versorgt wird, steht jedoch keine Gleichspannung zur unmittelbaren Energieversorgung von elektrischen Verbrauchern, wie z.B. Hochvoltverbrauchern in einem Fahrzeugbordnetz, oder als Eingangsgröße für einen Gleichspannungswandler zur Verfügung.
Die Erfindung basiert auf der Grundidee, einen zweiten Energiespeicher vorzusehen, aus welchem elektrische Verbraucher mit Gleichspannung versorgbar sind und welcher durch den steuerbaren ersten Energiespeicher geladen wird. Auf diese Weise kann die zur Versorgung von elektrischen Verbrauchern erforderliche Gleichspannung mit relativ geringem Hardwareaufwand erzeugt werden.

Die Grundidee der Erfindung wird durch die Merkmale des unabhängigen Anspruchs offenbart. Vorteilhafte Weiterbildungen der Erfindung sind Gegenstand der Unteransprüche.

Gemäß einer Ausführungsform umfasst das Ladegerät eine n-phasige Gleichrichtereinheit, welche n parallele Gleichrichterzweige umfasst, welche mit jeweils einem Energieversorgungszweig und der zugehörigen Phase der elektrischen Maschine verbunden sind, einen Zwischenkreiskondensator, welcher der Gleichrichtereinheit nachgeschaltet ist und aus dieser gespeist wird, und einen ersten Gleichspannungswandler, welcher dem Zwischenkreiskondensator nachgeschaltet ist und ein erstes Spannungsniveau des Zwischenkreiskondensators an ein zweites Spannungsniveau des zweiten Energiespeichers anpasst.

Während des motorischen Betriebs der elektrischen Maschine stehen am Ausgang des steuerbaren ersten Energiespeichers annähernd sinusförmige Ausgangsströme zur Verfügung, welche im Fall einer mehrphasigen elektrischen Maschine phasenverschoben sind. Diese werden unter Zuhilfenahme eines Gleichrichters, dessen Phasenanzahl der Phasenanzahl der elektrischen Maschine entspricht, zur Speisung eines Zwischenkreiskondensators genutzt. Das Spannungsniveau der gleichgerichteten Spannung variiert dabei in Abhängigkeit von einem aktuell eingestellten Raumzeiger der elektrischen Maschine sowie vom Ansteuerverfahren der Koppeleinheiten. Ein dem Zwischenkreiskondensator nachgeschalteter Gleichspannungswandler - häufig auch als DC/DC-Wandler bezeichnet - passt daher das sich ergebende erste Spannungsniveau des ersten Zwischenkreiskondensators an das zweite, gewünschte Spannungsniveau des zweiten Energiespeichers an. Dieses Spannungsniveau kann sowohl über dem Spannungsniveau des Zwischenkreiskondensators liegen (Hochsetzverhalten) als auch unter dem Spannungsniveau des ersten Zwischenkreiskondensators (Tiefsetzverhalten).

Gemäß einer alternativen Ausführungsform der Erfindungumfasst das Ladegerät eine n-phasige Gleichrichtereinheit, welche n parallele Gleichrichterzweige umfasst, welche mit jeweils einem Energieversorgungszweig und der zugehörigen Phase der elektrischen Maschine verbindbar sind, einen ersten Gleichspannungswandler, welcher der Gleichrichtereinheit nachgeschaltet ist, ein erstes Spannungsniveau der gleichgerichteten Spannung an ein zweites Spannungsniveau des zweiten Energiespeichers anpasst und einen Energiefluss aus dem steuerbaren Energiespeicher während des Betriebs der elektrischen Maschine derart steuert, dass eine konstante Leistung entnommen wird, und einen Zwischenkreiskondensator, welcher dem ersten Gleichspannungswandler nachgeschaltet ist und aus diesem gespeist wird.

Bei einer derartigen Anordnung kann der erste Gleichspannungswandler, welcher je nach Anwendungsfall als Hochsetzsteller, Tiefsetzsteller oder auch als Hoch-/Tiefsetzsteller, z.B. in Form eines Inverswandlers, ausgeführt sein kann, den Energiefluss aus dem steuerbaren Energiespeicher derart steuern, dass eine konstante Leistung entnommen wird. Dies führt dazu, dass die Spannung am Zwischenkreiskondensator nicht mehr schwankt und für den konkreten Anwendungsfall optimal gewählt werden kann. Außerdem treten auf diese Weise keine Phasen ohne Stromfluss auf, so dass eine ausreichende Pufferung auch durch vergleichsweise kleine Dimensionierung des Zwischenkreiskondensators erreichbar ist.

Gemäß einer weiteren Ausführungsform der Erfindung weist das Energieversorgungsnetz zusätzlich einen zweiten Gleichspannungswandler auf, welcher dem zweiten Energiespeicher nachgeschaltet ist und das zweite Spannungsniveau des zweiten Energiespeichers an ein drittes Spannungsniveau eines dem zweiten Gleichspannungswandler nachgeschalteten dritten Energiespeichers anpasst. Aus dem dritten Energiespeicher sind dann elektrische Verbraucher mit einer Gleichspannung auf dem dritten Spannungsniveau versorgbar.

Auf diese Weise lässt sich ein Zweispannungs-Energieversorgungsnetz realisieren, wobei das Spannungsniveau des zweiten Energiespeichers durch ein Batteriemanagementsystem relativ konstant gehalten wird, so dass der zweite Gleichspannungswandler auf einen schmalen Ein- und Ausgangsspannungsbereich und damit einstufig ausgelegt werden kann, was zu einem reduzierten Hardware-Aufwand führt.

Gemäß einer Ausführungsform ist der zweite Energiespeicher ein Hochspannungs-Energiespeicher. Demzufolge ist der erste Gleichspannungswandler ohne galvanische Trennung ausgeführt.

Ist der dritte Energiespeicher dagegen als Nieder- oder Mittelspannungs-Energiespeicher ausgeführt, so ist der zweite Gleichspannungswandler gemäß einer Ausführungsform der Erfindung mit galvanischer Trennung ausgeführt.

Schließlich können der erste Gleichspannungswandler auch mit galvanischer Trennung und der zweite Energiespeicher als Nieder- oder Mittelspannungs-Energiespeicher ausgeführt sein. Ist der zweite Energiespeicher auf eine Spannung ≤ 60V ausgelegt, so hat das den Vorteil, dass keine zusätzlichen Absichermaßnahmen, z.B. hinsichtlich Berührschutzes, getroffen werden müssen, was zu Kostenersparnissen führt. Voraussetzung ist aber natürlich, dass keiner der elektrischen Verbraucher ein höheres Betriebsspannungniveau benötigt.

Die Gleichrichtereinheit kann als Brückengleichrichter ausgestaltet sein. Gemäß einer Ausführungsform der Erfindung ist es aber vorgesehen, dass die Bezugsschiene des steuerbaren Energiespeichers mit einer Bezugsschiene des Ladegeräts verbindbar ist. In diesem Fall kann die Gleichrichtereinheit, insbesondere wenn die Koppeleinheiten Schaltelemente in Halbbrückenschaltung aufweisen, auch als n-Pulsgleichrichter ausgestaltet sein.

N-Pulsgleichrichter, welche für n =1 auch häufig als Einweggleichrichter bezeichnet werden, weisen n parallele Gleichrichterzweige mit jeweils einer Diode oder einem sonstigen Schaltelement auf. Es wird folglich nur die positive bzw. negative Halbschwingung verwendet, was bei Verwendung von Koppeleinheiten mit Schaltelementen in Halbbrückenschaltung aber keine negativen Folgen hat. Weisen die Koppeleinheiten Schaltelemnte in Vollbrückenschaltung auf, führt die Ausführung als N-Pulsgleichrichter dazu, dass die Spannung im Zwischenkreis entsprechend kleiner ist als bei Verwendung eines Brückengleichrichters. Von Vorteil ist aber der geringere Hardwarebedarf.

Unabhängig von dem Einsatz eines Brücken- oder N-Pulsgleichrichters hat die Verbindung der Bezugsschiene des steuerbaren Energiespeichers mit der Bezugsschiene des Ladegeräts den Vorteil, dass der Zwischenkreis des Energieversorgungsnetzes bei dieser Ausgestaltung auch bei still stehender elektrischer Maschine mit Spannung gespeist werden kann. So kann in jedem Energieversorgungszweig des steuerbaren ersten Energiespeichers eine identische Gleichspannung eingestellt und direkt in den Zwischenkreis gespeist werden. Dabei wird die Spannung vorteilhaft in jedem Energieversorgungszweig geregelt, um Ausgleichsströme in der elektrischen Maschine zu vermeiden.

Gemäß einer weiteren Ausführungsform der Erfindung kann die Gleichrichtereinheit auch als bidirektionaler Gleichrichter ausgeführt werden. Ein bidirektionaler Betrieb eines Gleichrichters kann dabei entweder dadurch erreicht werden, dass steuerbare Schaltelemente parallel zu den Dioden eines Diodengleichrichters geschaltet werden oder auch dass die Dioden vollständig durch steuerbare Schaltelement ersetzt werden. Der Einsatz bidirektionaler Gleichrichter bietet den Vorteil, dass dann die Energieversorgungszellen des steuerbaren ersten Energiespeichers auch mittels des zweiten Energiespeichers geladen werden können.

Ist die Gleichrichtereinheit als bidirektionaler Brückengleichrichter ausgestaltet, ist es vorteilhaft zwischen dem Ladegerät und den Energieversorgungszweigen des ersten Energiespeichers bzw. den Phasen der elektrischen Maschine jeweils zusätzliche Induktivitäten vorzusehen, um auf diese Weise eine Hochsetzfunktion zu realisieren, welche eine Ladung des Gleichspannungszwischenkreises bei aktiver elektrischer Maschine erlaubt, wenn das Spannungsniveau des Zwischenkreises über dem Sapnnungsniveau des steuerbaren Energiespeichers liegt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: ein schematisches Blockschaltbild einer ersten Ausführungsform eines erfindungsgemäßen Energieversorgungsnetzes,
- Fig. 2: ein schematisches Blockschaltbild einer zweiten Ausführungsform eines erfindungsgemäßen Energieversorgungsnetzes,
- Fig. 3: ein schematisches Blockschaltbild einer dritten Ausführungsform eines erfindungsgemäßen Energieversorgungsnetzes,
- Fig. 4: eine schematische Darstellung eines steuerbaren Energiespeichers inkl. dessen Anbindung an eine elektrische Maschine und eine Gleichrichtereinheit,
- Fig. 5: eine schematische Darstellung eines steuerbaren Energiespeichers inkl. dessen Anbindung an eine elektrische Maschine und eine Gleichrichtereinheit gemäß einer alternativen Ausführungsform,
- Fig. 6: eine schematische Darstellung eines steuerbaren Energiespeichers inkl. dessen Anbindung an eine elektrische Maschine und eine Gleichrichtereinheit gemäß der Ausführungsform nach Fig. 4 bei birektionaler Ausgestaltung der Gleichrichtereinheit und
- Fig. 7: eine schematische Darstellung eines steuerbaren Energiespeichers inkl. dessen Anbindung an eine elektrische Maschine und eine Gleichrichtereinheit gemäß einer weiteren alternativen Ausführungsform mit birektionaler Ausgestaltung der Gleichrichtereinheit.

### Ausführungsformen der Erfindung

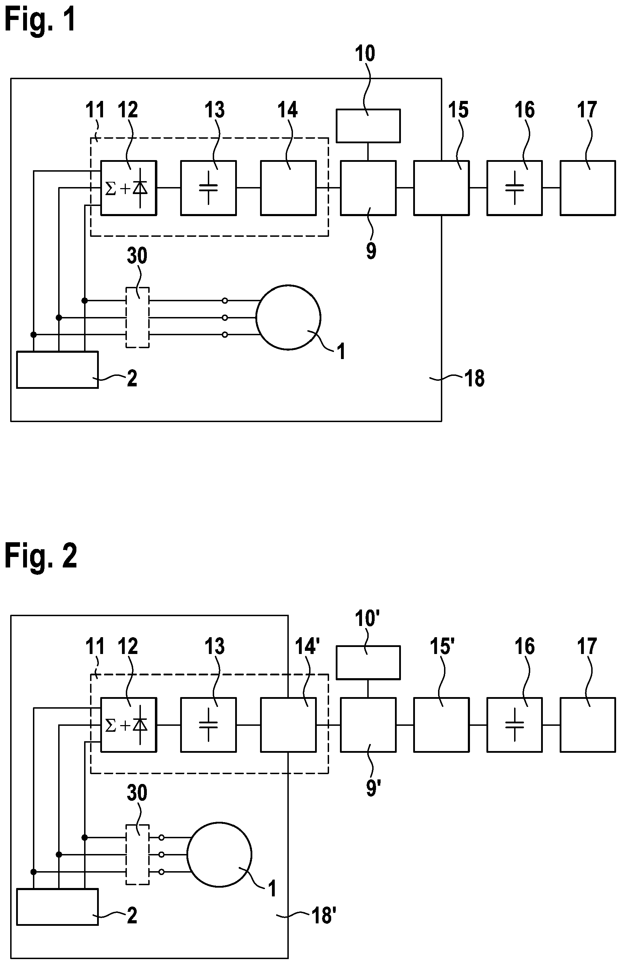

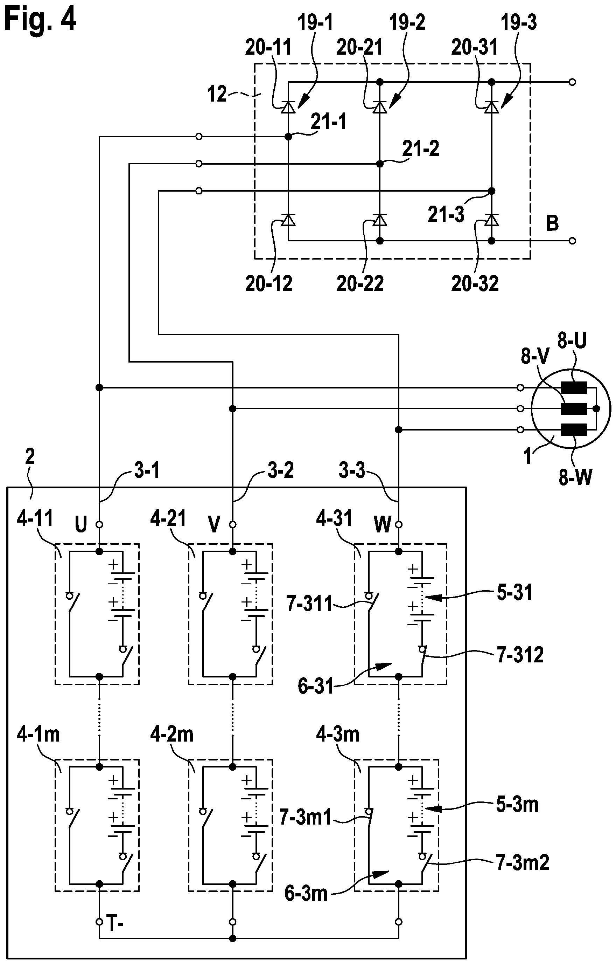

Figur 1 zeigt ein schematisches Blockschaltbild einer ersten Ausführungsform eines erfindungsgemäßen Energieversorgungsnetzes. An eine dreiphasige elektrische Maschine 1 ist ein steuerbarer erster Energiespeicher 2 angeschlossen. Der steuerbare erste Energiespeicher 2 umfasst drei Energieversorgungszweige 3-1, 3-2 und 3-3, welche einerseits mit einem niedrigen Bezugspotential T-(Bezugsschiene) und andererseits jeweils mit einzelnen Phasen U, V, W der elektrischen Maschine 1 verbunden sind (vgl. Figuren 4, 5, 6, 7). Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche in den Figuren 4 bis 7 aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In der in den Figuren 4 bis 7 dargestellten Ausführungsvariante werden die Koppeleinheiten 6 jeweils durch zwei steuerbare Schaltelemente 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Kopplungseinheit 6 zu unterbrechen. Alternativ können die Energiespeicherzellen 5 durch Schließen jeweils eines der Schaltelemente 7 einer Koppeleinheit 6 entweder überbrückt werden, z.B. durch Schließen des Schalters 7-311, oder in den jeweiligen Energieversorgungszweig 3 geschaltet werden, z.B. durch Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren ersten Energiespeicher 2 gesteuert werden. Der steuerbare erste Energiespeicher 2 erfüllt also insofern eine Doppelfunktion, da er einerseits der elektrischen Energieversorgung, andererseits aber auch der Steuerung der elektrischen Maschine 1 dient.

Die elektrische Maschine 1 weist Statorwicklungen 8-U, 8-V und 8-W auf, die im dargestellten Ausführungsbeispiel in Sternschaltung miteinander verschaltet sind. Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren ersten Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027 857 A1 und DE 10 2010 027 861 A1. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Der steuerbare erste Energiespeicher 2 liefert während eines Motorbetriebs der elektrischen Maschine 1 ausgangsseitig eine Wechselspannung zur Ansteuerung der elektrischen Maschine 1. Im Gegensatz zu konventionellen Systemen, bei welchen eine elektrische Maschine über einen Wechselrichter gesteuert wird und durch einen davon getrennten elektrischen Energiespeicher mit elektrischer Energie versorgt wird, steht jedoch keine Gleichspannung zur unmittelbaren Energieversorgung von elektrischen Verbrauchern, wie z.B. Hochvoltverbrauchern in einem Fahrzeugbordnetz, oder als Eingangsgröße für einen Gleichspannungswandler zur Verfügung.

Deshalb ist ein zweiter Energiespeicher 9 vorgesehen, aus welchem erste elektrische Verbraucher 10 mit Gleichspannung versorgbar sind und welcher über ein Ladegerät 11 durch den steuerbaren ersten Energiespeicher 1 geladen wird. Das Ladegerät 11 ist dazu eingangsseitig mit den Energieversorgungszweigen 3-1, 3-2 und 3-3 des ersten Energiespeichers 2 und den Phasen U, V, W der elektrischen Maschine 1 und ausgangsseitig mit dem zweiten Energiespeicher 9 verbunden.

Das Ladegerät 11 umfasst eine n-phasige Gleichrichtereinheit 12, welche n parallele Gleichrichterzweige umfasst, welche mit jeweils einem Energieversorgungszweig 3-1, 3-2 bzw. 3-3 des steuerbaren ersten Energiespeichers 2 und der jeweils zugehörigen Phase U, V bzw. W der elektrischen Maschine 1 verbunden sind. Das Ladegerät 11 weist außerdem einen Zwischenkreiskondensator 13 auf, welcher der Gleichrichtereinheit 12 nachgeschaltet ist und aus dieser gespeist wird. Das Spannungsniveau der gleichgerichteten Spannung variiert dabei in Abhängigkeit von einem aktuell eingestellten Raumzeiger der elektrischen Maschine 1. Daher ist ein erster Gleichspannungswandler 14 vorgesehen, welcher dem Zwischenkreiskondensator nachgeschaltet ist und ein erstes Spannungsniveau des Zwischenkreiskondensators 13 an ein zweites Spannungsniveau des zweiten Energiespeichers 9 anpasst.

Gemäß der in Figur 1 dargestellten Ausführungsform der Erfindung ist der zweite Energiespeicher 9 als Hochspannungs-Energiespeicher, z.B. in Form einer Hochvoltbatterie, ausgeführt und der erste Gleichspannungswandler 14 dementsprechend ohne galvanische Trennung ausgeführt.

Ein zweiter Gleichspannungswandler 15 , welcher dem zweiten Energiespeicher 9 nachgeschaltet ist, ist vorgesehen, um das zweite Spannungsniveau des zweiten Energiespeichers 9 an ein drittes Spannungsniveau eines dem zweiten Gleichspannungswandler 15 nachgeschalteten dritten Energiespeichers 16 anzupassen. Aus dem dritten Energiespeicher 16, welcher in dem in Figur 1 dargestellten Ausführungsbeispiel als Nieder- oder Mittelspannungs-Energiespeicher, z.B. in Form einer Batterie oder eines Supercaps, ausgeführt ist, sind zweite elektrische Verbraucher 17 mit einer Gleichspannung auf dem dritten Spannungsniveau versorgbar. Da der zweite Gleichspannungswandler 15 eine Absenkung des Spannungsniveaus von einem Hochvoltbereich in einen Nieder- oder Mittelvoltbereich bewirkt und damit ein Hochvoltnetz 18 sozusagen abschließt, ist er mit galvanischer Trennung ausgeführt.

Sollen zur Regelung der elektrischen Maschine 1 die Phasenströme der elektrischen Maschine gemessen werden, ist darauf zu achten, dass die Strommessung erst nach dem Abgriff des Ladegerätes 11 erfolgt. In Figur 1 ist dies durch einen Block mit dem Bezugszeichen 30 angedeutet.

Figur 2 zeigt eine alternative Ausführungsform eines erfindungsgemäßen Energieversorgungsnetzes. Diese unterscheidet sich von der in Figur 2 dargestellten Ausführungsform dahingehend, dass ein zweiter Energiespeicher 9' nicht als Hochspannungs-Energiespeicher, sondern als Mittelspannungs-Energiespeicher ausgeführt ist, aus welchem erst elektrische Verbraucher 10' mit Gleichspannung versorgbar sind . Demzufolge schließt bereits ein erster Gleichspannungswandler 14' ein Hochvoltnetz 18' ab und ist demzufolge mit galvanischer Trennung ausgeführt. Ein dem zweiten Energiespeicher 9' nachgeschalteter zweiter Gleichspannungswandler 15', welcher das zweite Spannungsniveau des zweiten Energiespeichers 9' an das dritte Spannungsniveau des dritten Energiespeichers 16 anpasst, kann demzufolge ohne galvanische Trennung ausgeführt sein.

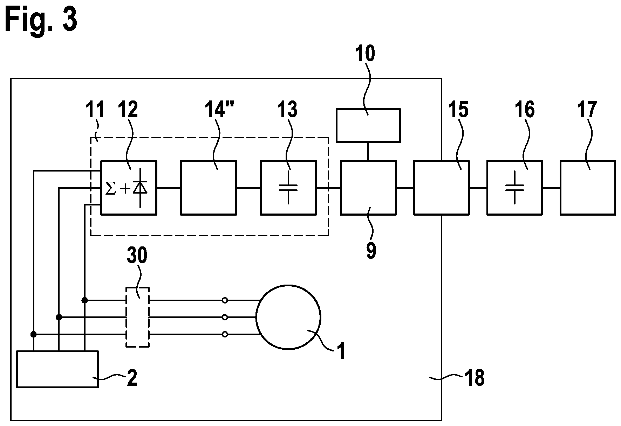

Figur 3 zeigt eine weitere alternative Ausführungsform eines erfindungsgemäßen Energieversorgungsnetzes. Diese unterscheidet sich von der in Figur 2 dargestellten Ausführungsform dahingehend, dass ein erster Gleichspannungswandler 14" dem Zwischenkreiskondensator 13 nicht nachgeschaltet, sondern vorgeschaltet ist. Auf diese Weise kann der Energiefluss aus dem steuerbaren Energiespeicher 2 während eines Betriebs der elektrischen Maschine 1 derart gesteuert werden, dass eine konstante Leistung entnommen wird. In Figur 3 ist der zweite Energiespeicher 9 analog zu Figur 1 als Hochspannungs-Energiespeicher dargestellt. Selbstverständlich ist die Ausgestaltung des Ladegeräts gemäß Figur 3 aber auch mit anderen Energiespeichern, wie z.B. einem einem Mittelspannungs-Energiespeicher gemäß Figur 2, kombinierbar.

In den Figuren 1, 2 und 3 sind jeweils Zweispannungs-Energieversorgungsnetze dargestellt, das heißt Energieversorgungsnetze, welche elektrische Verbraucher auf zwei Spannungsniveaus mit Energie versorgen können. Derartige Zweispannungs-Energieversorgungsnetze werden z.B. im Kraftfahrzeugbereich häufig eingesetzt und dort als Zweispannungsbordnetz bezeichnet. Ist für eine konkrete Anwendung ein Zwischenkreis mit einem einzigen Spannungsniveau ausreichend, da alle elektrischen Verbraucher mit diesem Spannungsniveau betrieben werden können, so kann selbstverständlich auf den zweiten Gleichspannungswandler 15, und den dritten Energiespeicher 16 verzichtet werden. Der erste Gleichspannungswandler 14 ist dann abhängig davon, ob der zweite Energiespeicher ein Hochspannungsspeicher oder ein Mittel-/Niederspannungsspeicher ist, ohne bzw. mit galvanischer Trennung ausgeführt.

Figur 4 zeigt eine schematische Darstellung des steuerbaren Energiespeichers 2 inkl. dessen Anbindung an die elektrische Maschine 1 und die Gleichrichtereinheit 12. Die Gleichrichtereinheit ist dabei entsprechend der Anzahl der Phasen U, V, W der elektrischen Maschine 1 und der Anzahl der Energieversorgungszweige 3-1, 3-2 und 3-1 des steuerbaren ersten Energiespeichers dreiphasig ausgelegt. Konkret ist die Gleichrichtereinheit gemäß der dargestellten Ausführungsform als sechspulsiger Diodengleichrichter in Brückenschaltung ausgeführt. Dabei ist jeweils ein Gleichrichterzweig 19-1, 19-2, 19-3, welcher jeweils zwei Dioden 20-11 und 20-12 bzw. 20-21 und 20-22 bzw. 20-31 und 20-32 aufweist an einem Anschlusspunkt 21-1 bzw. 21-2 bzw. 21-3, welcher jeweils zwischen den beiden Dioden 20 eines Gleichrichterzweiges 19 angeordnet ist, mit einem Energieversorgungszweig 3-1 bzw. 3-2 bzw. 3-3 und der zugehörigen Phase U bzw. V bzw. W der elektrischen Maschine 1 verbunden.

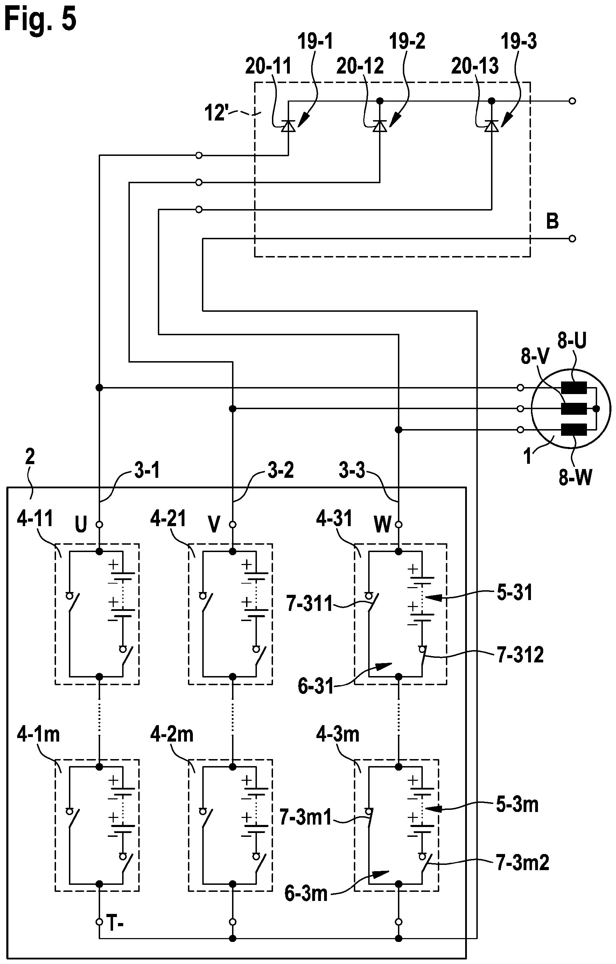

Figur 5 zeigt eine weitere Ausführungsform der Anbindung einer Gleichrichtereinheit 12' an die elektrische Maschine 1 und den steuerbaren ersten Energiespeicher 2. Dabei ist die Bezugsschiene T- des steuerbaren ersten Energiespeichers 2 mit einer Bezugsschiene B des Ladegeräts 11, von welchem in Figur 5 aber lediglich die Gleichrichtereinheit 12' dargestellt ist, verbunden. Weisen die Koppeleinheiten 6, wie dargestellt, Schaltelemente 7 in Halbbrückenschaltung auf, so treten nur positive Potenziale auf. Somit kann die Gleichrichtereinheit 12' ohne Beeinflussung der Funktionalität als 3-Pulsgleichrichter ausgeführt werden. Im Vergleich mit der als Brückengleichrichter ausgeführten Gleichrichtereinheit 12 gemäß Figur 4 weist der n-Pulsgleichrichter der Gleichrichtereinheit 12' keine Low-Side-Dioden 20-12, 20-22 und 20-32 mehr auf sondern lediglich noch High-Side-Dioden 20-11, 20-21 und 20-31.

Selbstverständlich kann die Gleichrichtereinheit aber auch bei Verbindung der Bezugsschienen des steuerbaren ersten Energiespeichers 1 und des Ladegeräts 11 als Brückengleichrichter ausgeführt sein, was insbesondere dann sinnvoll ist, wenn die Koppeleinheiten 6 Schaltelemente 7 in Vollbrückenschaltung aufweisen. Ansonsten muss in Kauf genommen werden, dass nur eine Halbschwingung genutzt wird.

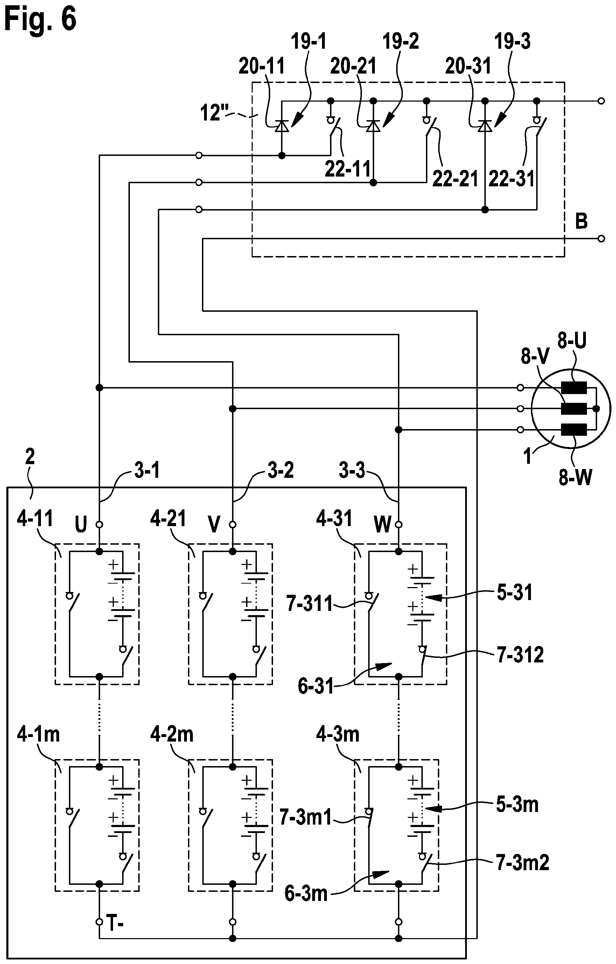

Alternativ zu den in den Figuren 4 und 5 dargestellten unidirektionalen Gleichrichtereinheiten 12 und 12' kann die Gleichrichtereinheit aber auch bidirektional ausgeführt werden, was die Möglichkeit einer Ladung der Energiespeicherzellen 5 des steuerbaren ersten Energiespeichers 2 mittels des zweiten Energiespeichers 9 bietet. Eine derartige Ausgestaltung einer Gleichrichtereinheit 12" ist in Figur 6 dargestellt. Die Gleichrichtereinheit 12" ist dabei analog der Gleichrichtereinheit 12' gemäß Figur 5 als Dreipulsgleichrichter mit jeweils nur einer Diode (High-Side-Diode) 20-11, 20-21 und 20-31 pro Gleichrichterzweig 19-1 bzw. 19-2 bzw. 19-3 ausgestaltet. Die Bidirektionalität, das heißt Betreibbarkeit in beide Richtungen wird dadurch erreicht, dass parallel zu den Dioden 20-11, 20-21 und 20-31 jeweils ein steuerbares Schaltelement 22-11 bzw. 22-21 bzw. 22-31 geschaltet ist. Alternativ dazu könnten die Dioden 20-11, 20-21 und 20-31 auch vollständig durch steuerbare Schaltelemente ersetzt werden.

Selbstverständlich kann auch bei einem Brückengleichrichter, wie er in Figur 4 dargestellt ist, auf diese Weise (Parallelschaltung von steuerbaren Schaltelementen oder Ersatz der Dioden durch steuerbare Schaltelemente) ein bidirektionaler Betrieb ermöglicht werden.

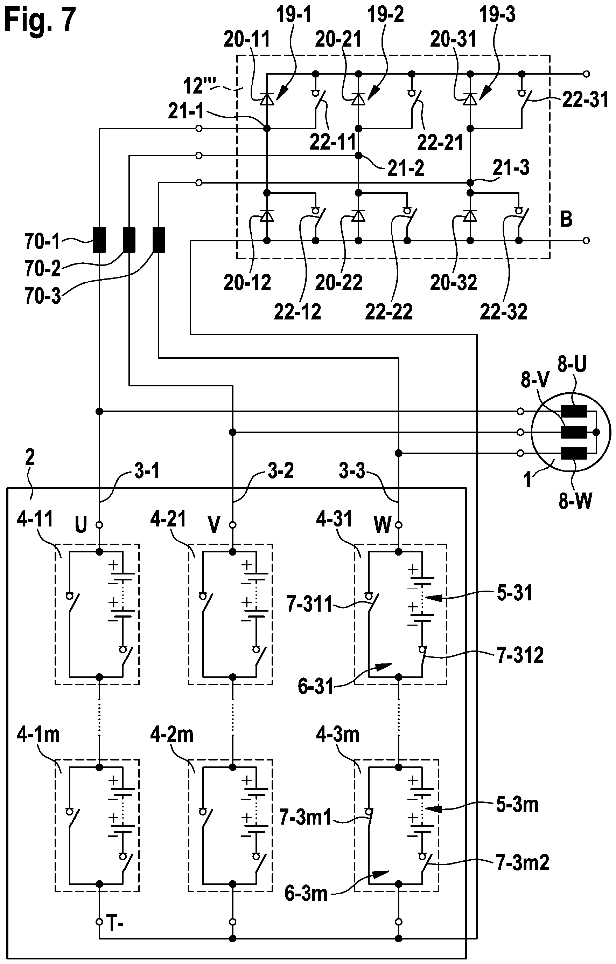

Figur 7 zeigt eine besonders vorteilhafte Anbindung einer Gleichrichtereinheit 12"', welche als birektionaler Brückengleichrichter ausgeführt ist, an die elektrische Maschine 1 und den steuerbaren ersten Energiespeicher 2. Die als birektionaler Brückengleichrichter ausgestaltete Gleichrichtereinheit 12'" weist dabei neben den Dioden 20-11, 20-12, 20-21, 20-22, 20-31 und 20-32 jeweils parallel geschaltete steuerbare Schaltelemente 22-11 bzw. 22-12 bzw. 22-21 bzw. 22-22 bzw. 22-31 bzw. 22-32 auf. Außerdem sind in den Verbindungsleitungen zwischen der elektrischen Maschine 1 bzw. dem steuerbaren elektrischen Energiespeicher 2 und der Gleichrichtereinheit 12'" jeweils zusätzliche Induktivitäten 70-1, 70-2 bzw. 70-3 vorgesehen. Eine derartige Anordnung ermöglicht die Realisierung einer Hochsetzfunktion von dem steuerbaren Energiespeicher 2 in den Gleichspannungszwischenkreis. Dabei kann auch der Energiefluss aus dem steuerbaren Energiespeicher 2 bei Betrieb der elektrischen Maschine 1 derart gesteuert werden, dass eine konstante Leistung entnommen wird.

## Patentansprüche

1. Energieversorgungsnetz, mit
- einem steuerbaren ersten Energiespeicher (2), welcher der Steuerung und der elektrischen Energieversorgung einer n-phasigen elektrischen Maschine (1), mit n ≥1, dient, wobei der erste Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbunden sind,
und wobei die Koppeleinheiten (6) in Abhängigkeit von Steuersignalen den jeweiligen Energieversorgungszweig (3-1, 3-2, 3-3) durch Öffnen erster Schaltelemente (7, 7-311 7-3m1) und zweiter Schaltelemente (7, 7-321, 7-3m1) der zugeordneten steuerbaren Koppeleinheit (6)unterbrechen, oder durch Schließen erster Schaltelemente (7, 7-311, 7-3m1) die Energiespeicherzellen (5) und zweiten Schaltelemente (7, 7-312, 7-3m2) der jeweiligen Koppeleinheit (6) überbrücken oder durch Schließen zweiter Schaltelemente (7, 7-312, 7-3m2) in den jeweiligen Energieversorgungszweig (3-1, 3-2; 3-3) geschalten werden, und
- einem zweiten Energiespeicher (9; 9'), aus welchem elektrische Verbraucher (10; 10') mit Gleichspannung versorgbar sind, und
- einem Ladegerät (11) für den zweiten Energiespeicher (9; 9'), welches ausgangsseitig mit dem zweiten Energiespeicher (9; 9') verbunden ist,
**dadurch gekennzeichnet, dass**
das Ladegerät (11) eingangsseitig mit den Energieversorgungszweigen (3-1, 3-2, 3-3) des ersten Energiespeichers (2) und den Phasen (U, V, W) der elektrischen Maschine (1) verbunden ist.

2. Energieversorgungsnetz nach Anspruch 1, wobei das Ladegerät (11) umfasst:
- eine n-phasige Gleichrichtereinheit (12; 12'; 12"), welche n parallele Gleichrichterzweige (19-1, 19-2, 19,3) umfasst, welche mit jeweils einem Energieversorgungszweig (3-1; 3-2; 3-3) und der zugehörigen Phase (U; V; W) der elektrischen Maschine (1) verbunden sind,
- einen Zwischenkreiskondensator (13), welcher der Gleichrichtereinheit (12; 12'; 12") nachgeschaltet ist und aus dieser gespeist wird, und
- einen ersten Gleichspannungswandler (14; 14'), welcher dem Zwischenkreiskondensator (13) nachgeschaltet ist und ein erstes Spannungsniveau des Zwischenkreiskondensators (13) an ein zweites Spannungsniveau des zweiten Energiespeichers (9; 9') anpasst.

3. Energieversorgungsnetz nach Anspruch 1, wobei das Ladegerät (11) umfasst:
- eine n-phasige Gleichrichtereinheit (12; 12'; 12"; 12"'), welche n parallele Gleichrichterzweige (19-1, 19-2, 19,3) umfasst, welche mit jeweils einem Energieversorgungszweig (3-1; 3-2; 3-3) und der zugehörigen Phase (U; V; W) der elektrischen Maschine (1) verbunden sind,
- einen ersten Gleichspannungswandler (14"), welcher der Gleichrichtereinheit (12; 12'; 12"; 12"') nachgeschaltet ist, ein erstes Spannungsniveau der gleichgerichteten Spannung an ein zweites Spannungsniveau des zweiten Energiespeichers (9; 9') anpasst und einen Energiefluss aus dem steuerbaren Energiespeicher (2) während des Betriebs der elektrischen Maschine (1) derart steuert, dass eine konstante Leistung zur Verfügung gestellt wird, und
- einen Zwischenkreiskondensator (13), welcher dem ersten Gleichspannungswandler (14") nachgeschaltet ist und aus diesem gespeist wird.

4. Energieversorgungsnetz nach einem der Ansprüche 1 bis 3, welches zusätzlich aufweist:
- einen zweiten Gleichspannungswandler (15; 15'), welcher dem zweiten Energiespeicher (9; 9') nachgeschaltet ist und das zweite Spannungsniveau des zweiten Energiespeichers (9; 9') an ein drittes Spannungsniveau eines dem zweiten Gleichspannungswandler (15; 15') nachgeschalteten dritten Energiespeichers (16) anpasst, und
- den dritten Energiespeicher (16), aus welchem elektrische Verbraucher (17) mit einer Gleichspannung auf dem dritten Spannungsniveau versorgbar sind.

5. Energieversorgungsnetz nach einem der Ansprüche 2 bis 4, wobei der erste Gleichspannungswandler (14; 14") ohne galvanische Trennung ausgeführt ist und der zweite Energiespeicher (9) als Hochspannungs-Energiespeicher ausgeführt ist.

6. Energieversorgungsnetz nach Anspruch 4 oder nach Anspruch 5 in Rückbezug auf Anspruch 4, wobei der zweite Gleichspannungswandler (15) mit galvanischer Trennung ausgeführt ist und der dritte Energiespeicher (16) als Nieder- oder Mittelspannungs-Energiespeicher ausgeführt ist.

7. Energieversorgungsnetz nach einem der Ansprüche 2 bis 4, wobei der erste Gleichspannungswandler (14') mit galvanischer Trennung ausgeführt ist und der zweite Energiespeicher (9') als Nieder- oder Mittelspannungs-Energiespeicher ausgeführt ist.

8. Energieversorgungsnetz nach einem der Ansprüche 2 bis 7, wobei die Gleichrichtereinheit (12; 12"') als Brückengleichrichter ausgestaltet ist.

9. Energieversorgungsnetz nach einem der vorhergehenden Ansprüche, wobei die Bezugsschiene (T-) des steuerbaren ersten Energiespeichers (2) mit einer Bezugsschiene (B) des Ladegeräts (11) verbindbar ist.

10. Energieversorgungsnetz nach Anspruch 9, wobei die Gleichrichtereinheit (12'; 12") als n-Pulsgleichrichter ausgestaltet ist.

11. Energieversorgungsnetz nach einem der Ansprüche 8 bis 10, wobei die Gleichrichtereinheit (12"; 12"') als bidirektionaler Gleichrichter ausgestaltet ist.

12. Energieversorgungsnetz nach Anspruch 11, wobei die Gleichrichtereinheit (12"; 12"') als bidirektionaler Brückengleichrichter ausgestaltet ist und zwischen dem Ladegerät (11) und den Energieversorgungszweigen (3-1, 3-2, 3-3) des ersten Energiespeichers (2) bzw. den Phasen (U, V, W) der elektrischen Maschine (1) jeweils zusätzliche Induktivitäten (70-1, 70-2, 70-3) angeordnet sind.

## Claims

1. Energy supply network, having
- a controllable first energy store (2), which serves to control and supply electrical energy to an n-phase electric machine (1), where n ≥ 1, wherein the first energy store (2) has n parallel energy supply branches (3-1, 3-2, 3-3), which
• each have at least two energy storage modules (4) connected in series, which each comprise at least one electrical energy storage cell (5) having an associated controllable coupling unit (6),
• are connected on the one side to a reference rail (T-) and
• are connected on the other side to a respective phase (U, V, W) of the electric machine (1),
and wherein, depending on the control signals, the coupling units (6) interrupt the respective energy supply branch (3-1, 3-2, 3-3) by opening first switching elements (7, 7-311, 7-3m1) and second switching elements (7, 7-321, 7-3m1) of the associated controllable coupling unit (6), or bypass the energy storage cells (5) and second switching elements (7, 7-312, 7-3m2) of the respective coupling unit (6) by closing first switching elements (7, 7-311, 7-3ml) or are switched into the respective energy supply branch (3-1, 3-2; 3-3) by closing second switching elements (7, 7-312, 7-3m2), and
- a second energy store (9; 9'), from which electrical loads (10; 10') can be supplied with DC voltage, and
- a charging device (11) for the second energy store (9; 9'), the output side of which charging device is connected to the second energy store (9; 9'),
**characterized in that**
the input side of the charging device (11) is connected to the energy supply branches (3-1, 3-2, 3-3) of the first energy store (2) and to the phases (U, V, W) of the electric machine (1).

2. Energy supply network according to Claim 1, wherein the charging device (11) comprises:
- an n-phase rectifier unit (12; 12'; 12"), which comprises n parallel rectifier branches (19-1, 19-2, 19-3), which are connected to a respective energy supply branch (3-1; 3-2; 3-3) and to the associated phase (U; V; W) of the electric machine (1),
- an intermediate circuit capacitor (13), which is connected downstream of the rectifier unit (12; 12'; 12") and is fed therefrom, and
- a first DC-to-DC converter (14; 14'), which is connected downstream of the intermediate circuit capacitor (13) and adjusts a first voltage level of the intermediate circuit capacitor (13) to a second voltage level of the second energy store (9; 9').

3. Energy supply network according to Claim 1, wherein the charging device (11) comprises:
- an n-phase rectifier unit (12; 12'; 12"; 12"'), which comprises n parallel rectifier branches (19-1, 19-2, 19-3), which are connected to a respective energy supply branch (3-1; 3-2; 3-3) and to the associated phase (U; V; W) of the electric machine (1),
- a first DC-to-DC converter (14"), which is connected downstream of rectifier unit (12; 12'; 12"; 12"'), adjusts a first voltage level of the rectified voltage to a second voltage level of the second energy store (9; 9') and controls a flow of energy from the controllable energy store (2) during the operation of the electric machine (1) in such a way that a constant power is provided, and
- an intermediate circuit capacitor (13), which is connected downstream of the first DC-to-DC converter (14") and is fed therefrom.

4. Energy supply network according to one of Claims 1 to 3, which additionally has:
- a second DC-to-DC converter (15; 15'), which is connected downstream of the second energy store (9; 9') and adjusts the second voltage level of the second energy store (9; 9') to a third voltage level of a third energy store (16) connected downstream of the second DC-to-DC converter (15; 15'), and
- the third energy store (16), from which electrical loads (17) can be supplied with a DC voltage at the third voltage level.

5. Energy supply network according to one of Claims 2 to 4, wherein the first DC-to-DC converter (14; 14") is embodied without DC isolation and the second energy store (9) is embodied as a high-voltage energy store.

6. Energy supply network according to Claim 4 or according to Claim 5 with reference back to Claim 4, wherein the second DC-to-DC converter (15) is embodied with DC isolation and the third energy store (16) is embodied as a low-voltage or medium-voltage energy store.

7. Energy supply network according to one of Claims 2 to 4, wherein the first DC-to-DC converter (14') is embodied with DC isolation and the second energy store (9') is embodied as a low-voltage or medium-voltage energy store.

8. Energy supply network according to one of Claims 2 to 7, wherein the rectifier unit (12; 12"') is designed as a bridge rectifier.

9. Energy supply network according to one of the preceding claims, wherein the reference rail (T-) of the controllable first energy store (2) can be connected to a reference rail (B) of the charging device (11).

10. Energy supply network according to Claim 9, wherein the rectifier unit (12'; 12") is designed as a n-pulse rectifier.

11. Energy supply network according to one of Claims 8 to 10, wherein the rectifier unit (12"; 12"') is designed as a bidirectional rectifier.

12. Energy supply network according to Claim 11, wherein the rectifier unit (12"; 12"') is designed as a bidirectional bridge rectifier and additional inductances (70-1, 70-2, 70-3) are arranged in each case between the charging device (11) and the energy supply branches (3-1, 3-2, 3-3) of the first energy store (2) or the phases (U, V, W) of the electric machine (1).

## Revendications

1. Réseau d'alimentation en énergie, comprenant
- un premier accumulateur d'énergie (2) commandable qui sert à la commande et à l'alimentation en énergie électrique d'une machine électrique (1) à n phases, avec n ≥ 1, le premier accumulateur d'énergie (2) possédant n branches d'alimentation en énergie (3-1, 3-2, 3-3) en parallèle, qui
* possèdent respectivement deux modules d'accumulation d'énergie (4) branchés en série, lesquels comprennent respectivement au moins une cellule d'accumulation d'énergie électrique (5) avec une unité de connexion (6) commandable associée,
* sont reliés d'un côté à une barre-bus de référence (T-) et
* sont reliés de l'autre côté respectivement à une phase (U, V, W) de la machine électrique (1),
et les unités de connexion (6), en fonction de signaux de commande, interrompant la branche d'alimentation en énergie (3-1, 3-2, 3-3) respective par ouverture de premiers éléments de commutation (7, 7-311, 7-3m1) et de deuxièmes éléments de commutation (7, 7-321, 7-3m1) de l'unité de connexion (6) associée, ou pontant les cellules d'accumulation d'énergie électrique (5) et des deuxièmes éléments de commutation (7, 7-312, 7-3m2) de l'unité de connexion (6) respective par fermeture de premiers éléments de commutation (7, 7-311, 7-3m1) ou étant commutées dans la branche d'alimentation en énergie (3-1, 3-2, 3-3) respective par fermeture de deuxièmes éléments de commutation (7, 7-312, 7-3m2), et
- un deuxième accumulateur d'énergie (9 ; 9') à partir duquel des récepteurs électriques (10 ; 10') peuvent être alimentés en tension continue, et
- un chargeur (11) pour le deuxième accumulateur d'énergie (9 ; 9'), lequel est relié, du côté de la sortie, au deuxième accumulateur d'énergie (9 ; 9'), **caractérisé en ce que**
le chargeur (11), du côté de l'entrée, est relié aux branches d'alimentation en énergie (3-1, 3-2, 3-3) du premier accumulateur d'énergie (2) et aux phases (U, V, W) de la machine électrique (1).

2. Réseau d'alimentation en énergie selon la revendication 1, le chargeur (11) comprenant :
- une unité de redressement (12 ; 12' ; 12") à n phases qui comporte n branches de redressement (19-1, 19-2, 19-3) en parallèle, lesquelles sont reliées respectivement à une branche d'alimentation en énergie (3-1 ; 3-2 ; 3-3) du premier accumulateur d'énergie (2) et à la phase (U ; V ; W) associée de la machine électrique (1),
- un condensateur de circuit intermédiaire (13) qui est branché en aval de l'unité de redressement (12 ; 12' ; 12") et qui est alimenté à partir de celle-ci, et
- un premier convertisseur de tension continue (14 ; 14') qui est branché en aval du condensateur de circuit intermédiaire (13) et qui adapte un premier niveau de tension du condensateur de circuit intermédiaire (13) à un deuxième niveau de tension du deuxième accumulateur d'énergie (9 ; 9').

3. Réseau d'alimentation en énergie selon la revendication 1, le chargeur comprenant :
- une unité de redressement (12 ; 12' ; 12" ; 12"') à n phases qui comporte n branches de redressement (19-1, 19-2, 19-3) en parallèle, lesquelles sont reliées respectivement à une branche d'alimentation en énergie (3-1 ; 3-2 ; 3-3) et à la phase (U ; V ; W) associée de la machine électrique (1),
- un premier convertisseur de tension continue (14") qui est branché en aval de l'unité de redressement (12 ; 12' ; 12"; 12"'), adapte un premier niveau de tension de la tension redressée à un deuxième niveau de tension du deuxième accumulateur d'énergie (9 ; 9') et commande un flux d'énergie issu de l'accumulateur d'énergie (2) commandable pendant le fonctionnement de la machine électrique (1) de telle sorte qu'une puissance constante est mise à disposition, et
- un condensateur de circuit intermédiaire (13) qui est branché en aval du premier convertisseur de tension continue (14") et qui est alimenté à partir de celui-ci.

4. Réseau d'alimentation en énergie selon l'une des revendications 1 à 3, lequel possède en plus :
- un deuxième convertisseur de tension continue (15 ; 15') qui est branché en aval du deuxième accumulateur d'énergie (9 ; 9') et qui adapte le deuxième niveau de tension du deuxième accumulateur d'énergie (9 ; 9') à un troisième niveau de tension d'un troisième accumulateur d'énergie (16) branché en aval du deuxième convertisseur de tension continue (15 ; 15'), et
- le troisième accumulateur d'énergie (16), à partir duquel des récepteurs électriques (17) peuvent être alimentés avec une tension continue au troisième niveau de tension.

5. Réseau d'alimentation en énergie selon l'une des revendications 2 à 4, le premier convertisseur de tension continue (14 ; 14") étant réalisé sans isolation galvanique et le deuxième accumulateur d'énergie (9) étant réalisé sous la forme d'un accumulateur d'énergie à haute tension.

6. Réseau d'alimentation en énergie selon la revendication 4 ou selon la revendication 5 en référence à la revendication 4, le deuxième convertisseur de tension continue (15) étant réalisé avec isolation galvanique et le troisième accumulateur d'énergie (16) étant réalisé sous la forme d'un accumulateur d'énergie à basse ou moyenne tension.

7. Réseau d'alimentation en énergie selon l'une des revendications 2 à 4, le premier convertisseur de tension continue (14') étant réalisé avec isolation galvanique et le deuxième accumulateur d'énergie (9') étant réalisé sous la forme d'un accumulateur d'énergie à basse ou moyenne tension.

8. Réseau d'alimentation en énergie selon l'une des revendications 2 à 7, l'unité de redressement (12 ; 12"') étant réalisée sous la forme d'un redresseur en pont.

9. Réseau d'alimentation en énergie selon l'une des revendications précédentes, la barre-bus de référence (T-) du premier accumulateur d'énergie (2) commandable pouvant être reliée à une barre-bus de référence (B) du chargeur (11).

10. Réseau d'alimentation en énergie selon la revendication 9, l'unité de redressement (12' ; 12") étant réalisée sous la forme d'un redresseur à impulsions.

11. Réseau d'alimentation en énergie selon l'une des revendications 8 à 10, l'unité de redressement (12" ; 12"') étant réalisée sous la forme d'un redresseur bidirectionnel.

12. Réseau d'alimentation en énergie selon la revendication 11, l'unité de redressement (12" ; 12"') étant réalisée sous la forme d'un redresseur en pont bidirectionnel et des inductances (70-1, 70-2, 70-3) supplémentaires étant respectivement disposées entre le chargeur (11) et les branches d'alimentation en énergie (3-1, 3-2, 3-3) du premier accumulateur d'énergie (2) ou les phases (U, V, W) de la machine électrique (1).
